(19) Europäisches Patentamt
European Patent Office
Office européen des brevets

(11) Veröffentlichungsnummer : **0 057 756**
**B1**

(12) **EUROPÄISCHE PATENTSCHRIFT**

(45) Veröffentlichungstag der Patentschrift : **20.02.85**

(51) Int. Cl.⁴ : **G 06 F 15/16**, G 06 F 13/14

(21) Anmeldenummer : **81108821.0**

(22) Anmeldetag : **23.10.81**

(54) **Anordnung zum Datenaustausch in parallel arbeitenden Multi-Mikrorechnersystemen.**

(30) Priorität : **11.02.81 DE 3104928**
**11.02.81 DE 3104903**

(43) Veröffentlichungstag der Anmeldung : **18.08.82 Patentblatt 82/33**

(45) Bekanntmachung des Hinweises auf die Patenterteilung : **20.02.85 Patentblatt 85/08**

(84) Benannte Vertragsstaaten : **AT BE CH FR GB IT LI NL SE**

(56) Entgegenhaltungen :
**DE-A- 2 742 035**
**FR-A- 2 403 600**
**US-A- 4 149 242**
**ELEKTRONIK, Heft 20, 1979, Seiten 73-77, München, DE.**
**Funkschau 1980, Heft 11, Seiten 105-107**
**Elektronische Rechenanlagen, 1978, Heft 3, Seiten 115-122**

(73) Patentinhaber : **Siemens Aktiengesellschaft**
**Berlin und München Wittelsbacherplatz 2**
**D-8000 München 2 (DE)**

(72) Erfinder : **Holzner, Peter, Ing.-grad.**
**Otto-Wagner-Strasse 12**
**D-8034 Germering (DE)**
Erfinder : **Sedlmeier, Werner, Dipl.-Ing.**
**Zielstattstrasse 25**
**D-8000 München 70 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 057 756 B1

**Beschreibung**

Die Erfindung betrifft eine Anordnung zum Datenaustausch zwischen Mikrorechnern von parallel arbeitenden Multi-Mikrorechnersystemen, die im wesentlichen aus Mikroprozessoren mit zugehörigen Programmspeichern, Schreib-Lese-Speichern und jeweils einer Ein-Ausgabeeinheit bestehen.

Wenn Zeitbedingungen und Umfang einer durch Digitalrechner zu bearbeitenden Aufgabe so beschaffen sind, daß sie die Leistungsfähigkeit eines einzelnen Rechners überschreiten, die Aufgabe aber auch so komplex ist, daß sie nicht auf mehrere, unabhängig voneinander arbeitende Anlagen verteilt werden kann, dann wird ein Mehrrechnersystem verwendet.

In vielen Bereichen haben Mikrorechner die bisher verwendeten Großrechner ersetzt. Wegen der geringen Abmessungen der Mikrorechner ist es möglich, kompakte Multi-Mikrorechnersysteme herzustellen. In der Zeitschrift « Elektronik », 1979, Heft 20, Seiten 73-77 werden Bus-Strukturen für Mehrrechnersysteme beschrieben. Auf Seite 76, rechte Spalte, wird ein Mehrrechnersystem mit einer Ein-Bus-Struktur beschrieben. Dieses Mehrrechnersystem besteht aus einem Dialogrechner und mehreren Funktionsrechnern (Bild 6). De) Dialogrechner ist ein Direct-Memory-Access-Controller (DMA-Controller) — ein Baustein über den ein direkter Zugriff zu den Schreib-Lese-Speichern des angeschlossenen Rechners möglich ist — zugeordnet. Über den DMA-Controller ist ein direkter Zugriff auf den Schreib-Lese-Speicher des Dialog-Rechners über den Adressbus und den Datenbus möglich. Über Trennstufen (Tore) ist der Datenbus des Dialogrechners mit dem DMA-Controller und den Datenbussen der Funktionsrechner verbunden. Die Adressbusse der Dialogrechner werden über eigene Adressgeber angesteuert. Diese Adressgeber bedeuten einen erhöhten Bauteileaufwand. Außerdem ist eine zeitliche Koordination mit dem DMA-Controller erforderlich, was im allgemeinen eine Verlangsamung des Speicherzugriffs mit sich bringt. Üblicherweise wird während eines DMA-Zugriffs zum Speicher eines Rechners dieser Rechner angehalten ; vgl. US-A-4149242.

Wenn die Anforderungen an die Zuverlässigkeit eines Rechners so hoch sind, daß das Ausfallrisiko einer Einzelanlage nicht verantwortet werden kann, so wird ein zweites Rechnersystem, das die gleichen Funktionen ausführt, parallelgeschaltet. Überwachungsschaltungen und Überwachungsprogramme sorgen dafür, daß der funktionsfähige Rechner das Arbeitsprogramm durchführt. Dabei kann das Redundanzsystem entweder im Stand-By-Betrieb oder Hot-Stand-By-Betrieb stehen oder im ständigen Parallelbetrieb gleichzeitig zum aktiven System die Aufgaben bearbeiten.

Die Lösung mit Stand-By-Betrieb führt bei Ausfall der aktiven Anlage zu längeren Unterbrechungszeiten, da größere Datenmengen ausgetauscht werden müssen. Bei Einrichtungen im Hot-Stand-By-Betrieb wird der Speicher (die Speicher) des nicht aktiven Rechnersystems in regelmäßigen Abständen durch den aktiven Rechner neu beschrieben. Diese Verfahrensweise hat den Nachteil, daß im Falle eines noch nicht erkannten Fehlers im aktiven System auch die Daten im nicht aktiven System durch die fehlerbehafteten ersetzt werden. Deshalb ist die Methode des ständigen Parallelbetriebs vorzuziehen. Da beide Systeme auf gleichem Wissensstand sind, ergeben sich keine Schwierigkeiten, wenn eines der beiden Systeme bei einem Ausfall des anderen Systems die Aufgaben allein abwickeln muß. Im Falle eines harmlosen Fehlers genügt die Übertragung weniger Bytes, um die Speicher beider Systeme auf gleichen Informationsstand zu bringen. Im Falle eines schwerwiegenden Fehlers eines Systems oder bei Wiederanlauf eines Systems nach einer Reparatur kann es erforderlich sein, große Speicherbereiche oder den ganzen Speicherinhalt zu übertragen.

Das in der bereits zitierten Zeitschrift « Elektronik », 1979, Heft 20, S. 73-77 auf Seite 76, rechte Spalte und Seite 77 beschriebene Mehrrechnersystem (Bild 6) enthält einen Dialogrechner, der allein den Direkt-Memory-Controller programmieren kann. Dadurch entsteht eine Master-Slave-Struktur. Zur Beseitigung dieses Nachteils wird ein eigener Rechner (Bus-Rechner) vorgeschlagen, der jedoch auch wieder aus Zuverlässigkeitsgründen doppelt ausgeführt werden müßte.

Aus der DE-AS 27 49 226 ist eine Datenaustauschsteuerung für zwei Mikrocomputer bekannt. Der Datenaustausch wird hierbei über « first-in-first-out »-Speicher erzielt. Diese Speicher sind jedoch für größere Datenmengen ungeeignet.

Die Verwendung von Bustrennstufen ist aus der DE-AS 27 42 035 zu entnehmen.

Aufgabe der Erfindung ist es, bei parallel arbeitenden Multi-Mikroprozessorsystemen eine Anordnung mit geringem Schaltungsaufwand anzugeben, die einen raschen Datenaustausch sowohl zwischen den Multi-Mikroprozessorsystemen als auch innerhalb jedes Multi-Mikroprozessorsystems ermöglicht.

Ausgehend vom einleitend beschriebenen Stand der Technik wird diese Aufgabe dadurch gelöst, daß jedem ersten Mikrorechner jedes Multi-Mikrorechnersystem ein DMA-Controller über Systembusse zugeordnet ist, daß die Systembusse beider ersten Mikrorechner über eine Systembustrennstufe miteinander verbunden sind, daß die Steuerung des Datenaustausches zwischen den Schreib-Lese-Speichern eines Multi-Mikrorechnersystems mit den Schreib-Lese-Speichern eines anderen Multi-Mikorechnersystems von einem der DMA-Controller erfolgt, während der andere DMA-Controller inaktiv geschaltet ist, daß zum Datenaustausch Steuerleitungen vorgesehen sind, über die durch HALT-Anfragesignale des aktiven DMA-Controllers alle Mikroporzessoren der Mikrorechner in den HALT-Zustand geschaltet werden, daß HALT-Bestätigungssignale eines jeden Multi-Mikroprozessorsystems jeweils über ein UND-Gatter zusammengefaßt sind, daß Ausgänge der UND-Gatter mit den Eingängen einer gemeinsamen Steuerlogik verbunden sind, die zum Datenaustausch die Systembustrennstufe und die Bustrennstufen zwischen den Daten austauschenden Mikrorechnern durchschaltet, daß die Ausgänge der UND-Gatter außerdem über ein gemeinsames UND-Gatter auf eine Steuerlogikschaltung jedes DMA-Controllers geführt ist, die ein HALT-Bestätigungssignal an den aktiven DMA-Controller abgibt, daß ein Signal Speicher-Lesen des aktiven DMA-Controllers Schreib-Lese-Logikschaltungen des Daten ausgebenden Multi-Mikrorechnersystems zugeführt ist, daß ein Signal Speicher-Schreiben des aktiven DMA-Controllers Schreib-Lese-Logikschaltungen des Daten empfangenden Multi-Mikroprozessorsystems zugeführt ist, daß die von einer jeden Multi-Mikroprozessorsystem zugeordneten Ein-Ausgabeeinheit abgegebenen DMA-Anfrage-signale den Mikroprozessoren und deren Schreib-Lese-Logikschaltungen zugeführt werden und daß jedoch für den Datenaustausch zwischen den Schreib-Lese-Speichern der Mikrorechner eines Multi-Mikrorechnersystems jeweils der diesem System zugeordnete DMA-Controller aktiv geschaltet ist.

Bei dieser Lösung ist es vorteilhaft, daß mehrere zusätzliche Rechner über Bustrennstufen zu einem Multi-Mikroprozessorsystem zusammengeschaltet werden, daß diese Rechnersysteme unabhängig voneinander arbeiten können und daß der Datenaustausch zwischen den einzelnen Rechnern eines Multi-Mikrorechnersystems und der Datenaustausch zwischen zwei oder mehreren Multi-Mikrorechnersystemen über den DMA-Controller erfolgt. Hierdurch kann durch nur einen DMA-Controller je Rechnersystem sowohl ein rascher Datenaustausch zwischen den Arbeitsspeichern der Einzelrechner als auch ein rascher Datenaustausch zwischen den Multi-Mikrorrechnersystemen erfolgen. Bei diesem System können natürlich auch mehr als zwei oder jeweils nur ein Mikrorechner in einem Rechnersystem verwendet werden.

Zur weiteren Erhöhung der Betriebssicherheit ist es vorteilhaft, wenn mehr als zwei Mikrorechnersysteme über weitere Systembustrennstufen parallelgeschaltet sind.

Wählt man beispielsweise drei parallel arbeitende Rechnersysteme, so können viele Überwachungsschaltungen und Überwachungsprogramme entfallen, da die Überwachung aufgrund eines einfachen Mehrheitsentscheids erfolgen kann.

Es ist vorteilhaft, wenn der Datenaustausch vom DMA-Controller des Daten empfangenden Mikrorechners oder Multi-Mikrorechnersystems gesteuert wird und über ihn erfolgt. Grundsätzlich ist es sinnvoll, wenn der Datenaustausch vom DMA-Controller des Daten empfangenden Rechners gesteuert wird, um die Übertragung von fehlerbehafteten Daten zu vermeiden. Bei Ausfall eines Systems oder des DMA-Controllers wird der Datenaustausch von oder zu diesem System unterbunden.

Es ist zweckmäßig, daß Überwachungseinrichtungen vorgesehen sind, die beim Auftreten eines Fehlers einen Datenaustausch vom fehlerfreien System in das fehlerhafte System veranlassen.

Durch Verwendung von Überwachungsschaltungen kann auf einen dritten parallel arbeitenden Rechner oder auf ein drittes parallel arbeitendes Multirechnersystem verzichtet werden. Die Überwachungsschaltungen werden hierbei als Programmablaufzeit- und Schaltungsüberwachung (Watch-dog, Hardware-Monitor) und auch als « software »-Überwachung (Programm Überwachung) ausgeführt.

Es ist sinnvoll, wenn den Schreib-Lese-Speichern jedes Mikrorechners eines Multi-Mikrorechnersystems ein anderer Adressenbereich zugeordnet ist.

Durch die verschiedenen Adressenbereiche können die Schreib-Lese-Speicher der verschiedenen Rechner eines Systemes ohne weiteren Schaltungsaufwand angesprochen werden. Beim Datenaustausch liegt dieselbe Adresse an den entsprechenden Schreib-Lese-Speichern der beiden miteinander verbundenen Rechnersysteme, was einen optimal schnellen und einfachen Datenaustausch ermöglicht. Es ist selbstverständlich auch möglich, gleiche Adressenbereiche bei verschiedenen Schreib-Lese-Speichern eines Rechnersystems zu verwenden, die dann durch weitere Schaltungsmaßnahmen, z. B. über « Chip Select »-Eingänge (Baustein-Auswahleingänge) angesteuert werden. In Sonderfällen ist die Verwendung gleicher Adressenbereiche in zwei verschiedenen Mikrorechnern zugeordneten Schreib-Lese-Speichern möglich, um einen raschen Datenaustausch zwischen gleichen Speicherplätzen dieser Speicher zu erreichen.

Es ist vorteilhaft, daß jedes Multi-Mikrorechnersystem mehr als zwei Mikrorechner enthält, daß die weiteren Mikrorechner über weitere Bustrennstufen an den Adressenbus und den Datenbus des DMA-Controllers angeschaltet sind, daß für den Datenaustausch zwischen den Schreib-Lese-Speichern der Mikrorechner Steuerleitung des ersten Mikrorechners mit zugeordnetem DMA-Controller vorgesehen sind, die die erforderlichen Bustrennstufen der Adressen- und Datenbusse zwischen den Daten austauschenden Mikrorechnern eines Multi-Mikrorechnersystems durchschalten, und daß weitere Steuerleitungen zwischen dem DMA-Controller und den Mikrorechnern vorgesehen sind, die über Speicher-Lesebefehle und Speicher-Schreibbefehle zusammen mit der richtigen Durchschaltung des Datenbusses die Richtung des Datenaustausches über den DMA-Controller zwischen den Schreib-Lese-Speichern der Mikrorechner festlegen.

Die Datenbusse als auch die Adressenbusse der Mikrorechner sind über Trennstufen zusammenschaltbar. Hierdurch wird ein optimal rascher Datenaustausch über den DMA-Controller ermöglichst. Die Programmierung des DMA-Controllers, z. B. über die Adressenbereiche, erfolgt über den ersten Mikrorechner, dem der DMA-Controller zugeordnet ist. Der Datenaustausch ist zwischen den Schreib-Lese-Speichern beliebiger Rechner möglich. Die Schreib-Lese-Steuerung erfolgt vom DMA-Controller aus.

Es ist vorteilhaft, daß bei der jedem Multi-Mikrorechnersystem zugeordneten Ausgabeeinheit Ausgänge für die Richtungssignale vorgesehen sind, die mit Eingängen der Schreib-Lese-Logikschaltungen verbunden sind, daß die Ausgänge des DMA-Controllers, die ein Schreibsignal oder ein Lesesignal abgeben, mit weiteren Eingängen der Schreib-Lese-Logikschaltungen und mit den Richtungssignalen verknüpft sind, daß ein Ausgang des DMA-Controllers, der ein HALT-Anforderungssignal abgibt, mit den HALT-Eingängen der Mikroprozessoren verbunden ist, daß die HALT-Bestätigungsausgänge der Mikroprozessoren mit einer Steuerlogik verbunden sind, die die HALT-Bestätigungssignale über ein UND-Gatter zusammenfaßt, dessen Ausgang mit den entsprechenden Bustrennstufen verbunden ist und dem HALT-Bestätigungseingang des DMA-Controllers zur Auslösung des Datenaustausches zugeführt ist.

Es ist günstig, daß zwischen dem Ausgang der Steuerlogik und dem HALT-Bestätigungseingang des DMA-Controllers ein zweites UND-Gatter eingeschaltet ist, dessen zweiter Eingang mit dem Ausgang eines ODER-Gatters verbunden ist, an dessen Eingängen die Richtungssignale anliegen. Bei dieser Schaltungsanordnung wird überprüft, daß alle Mikroprozessoren der Mikrorechner in den HALT-Zustand geschaltet sind und die Schreibrichtungssignale anliegen, bevor der Datenaustausch über den DMA-Controller erfolgt.

Dies gilt ebenso für die Systembusse der Rechner. Nach dem Datenaustausch, der allein vom DMA-Controller gesteuert wird, erfolgt wieder die Auftrennung der Systembusse, so daß die Rechner eines Systems nach dem Datenaustausch wieder unabhängig voneinander arbeiten können.

Weitere vorteilhafte Ausbildungen der Erfindung sind in den übrigen Unteransprüchen angegeben.

Ein Ausführungsbeispiel der Erfindung wird an Hand der Figuren 1 bis 5 näher beschrieben. Es zeigen

Figur 1 ein Prinzipschaltbild eines Multi-Mikrorechnersystems,

Figur 2 ein detaillierteres Ausführungsbeispiel eines Zwei-Mikrorechnersystems,

Figur 3 das Prinzipschaltbild zum Datenaustausch zwischen zwei parallelgeschalteten Multi-Mikrorechnersystemen und

Figur 4 ein Ausführungsbeispiel parallelgeschalteter Multi-Mikrorechnersysteme,

Figur 5 ein erweitertes Prinzipschaltbild eines Multi-Mikrorechnersystems nach Fig. 4.

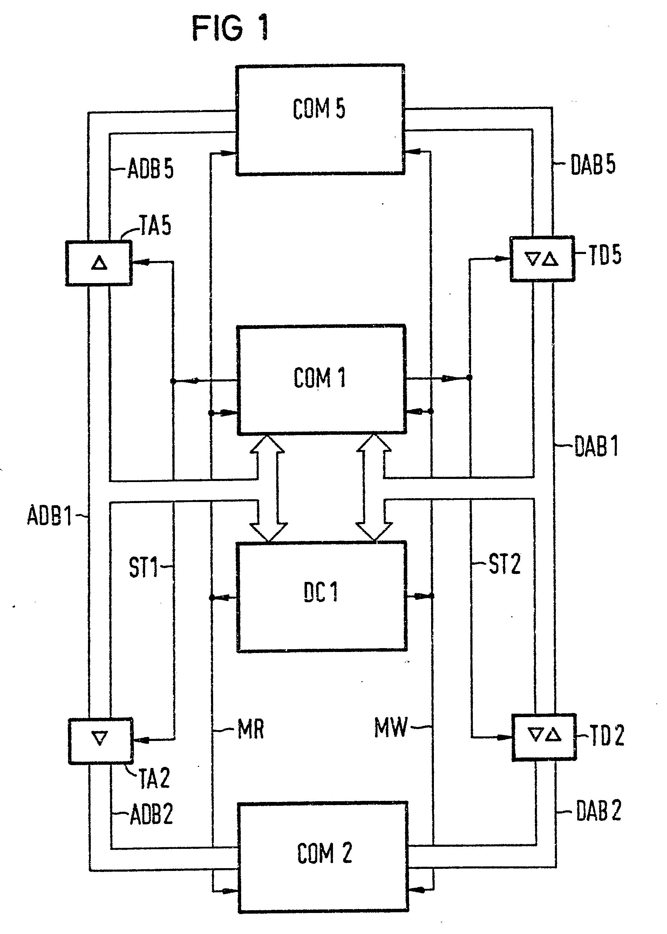

In Fig. 1 ist ein Prinzipschaltbild eines Multi-Mikrorechnersystems mit drei Mikrorechnern COM1, COM2 und COM5 dargestellt, das einem von z. B. zwei parallel arbeitenden Systemen entspricht. Dem ersten Mikrorechner COM1 ist ein DMA-Controller DC1 zugeordnet. Der erste Rechner COM1 und der DMA-Controller DC1 sind über einen Adressenbus ADB1 und einen Datenbus DAB1 miteinander verbunden. Die Busports sind in « Three-State-Logik » ausgeführt. Ergänzend sei klargestellt, daß jeder Mikrorechner einen eigenen Programmspeicher sowie einen eigenen Schreib-Lese-Speicher enthält. Über eine erste Adressenbus-Trennstufe TA2 ist der Adressenbus ADB2 eines zweiten Mikrorechners COM2 und über eine erste Datenbus-Trennstufe TD2 ist der Datenbus DAB2 des zweiten Mikrorechners an die entsprechenden Busse des DMA-Controllers DC1 bzw. des ersten Mikrorechners COM1 angeschaltet. Als DMA-Controller kann beispielsweise der Baustein Am 9517 der Firma AMD, Synnyvale, California, verwendet werden. In gleicher Weise ist ein weiterer Mikrorechner COM5 über eine zweite Adressenbus-Trennstufe TA5 und eine weitere Datenbus-Trennstufe TD5 an den Adressenbus ADB1 und den Datenbus DAB1 des ersten Mikrorechners angeschaltet. Der Adressenbus des weiteren Rechners ist mit ADB5, der Datenbus des weiteren Rechners mit DAB5 bezeichnet. Die Adressenbus-Trennstufen TA2 und TA5 sind über Steuerleitungen ST1 schaltbar, die mit einem Steuerausgang des Mikrorechners COM1 verbunden sind. Die Datenbus-Trennstufen TD2 und TD5 sind über weitere Steuerleitungen ST2 schaltbar, die mit einem weiteren Steuerausgang des Mikrorechners COM1 verbunden sind. Der DMA-Controller DC1 liefert die Lesesignale MR und Schreibsignale MW. Dies ist durch zwei weitere Leitungen MR, MW dargestellt, die mit den entsprechenden Lese- bzw. Schreibeingängen der drei Mikrorechner COM1, COM2 und COM5 bzw. deren hier nicht dargestellten Schreib-Lese-Speichern verbunden sind. Da es sich bei der Fig. 1 um ein Prinzipschaltbild handelt, ist es selbstverständlich, daß weitere Details wie Steuer-Logikschaltungen, Ein-Ausgabeeinheiten usw. für den Funktionsablauf erforderlich sind.

Alle drei Mikrorechner COM1, COM2, COM5 können voneinander unabhängig arbeiten, wenn die Bustrennstufen sperren. Am ersten Rechner COM1 steht dabei noch der DMA-Controller DC1 zur Verfügung, um Daten innerhalb seines eigenen Schreib-Lese-Speichers austauschen zu können. Ein Datenaustausch zwischen dem ersten Mikrorechner COM1 und dem zweiten Mikrorechner COM2 erfolgt über den DMA-Controller DC1. Hierzu wird der erste Mikrorechner COM1 und der zweite Mikrorechner COM2 über nicht dargestellte Steuerleitungen in den HALT-Zustand geschaltet. Die Ausgangsports der Mikroprozessoren der Mikrorechner werden hochohmig (Three-State-Zustand) und der DMA-Controller DC1 kann den Datenaustausch zwischen dem Speicher des ersten Rechners COM1 und dem des zweiten Rechners COM2 steuern. Die Adressenbereiche werden vom ersten Rechner COM1 festgelegt. Zum Datenaustausch ist es erforderlich, daß die erste Adressenbustrennstufe TA2 und die erste Datenbus-Trennstufe TD2 durchgeschaltet sind. Der DMA-Controller DC1 legt bei einem Datenaustausch vom Schreib-Lese-Speicher des zweiten Mikrorechners in den Schreib-Lese-Speicher des ersten Mikrorechners zuerst die Lese-Adresse an den Schreib-Lese-Speicher des zweiten Rechners COM2 an. Mit einem Signal MR wird das entsprechende Wort (Byte) ausgelesen und gelangt zunächst in einen temporären Speicher des DMA-Controllers DC1. Jetzt wird die Schreibadresse vom DMA-Controller DC1 ausgegeben und mit dem Schreibsignal MW in den Schreib-Lese-Speicher des ersten Rechners COM1 eingeschrieben. In entsprechender Weise kann auch ein Austausch der Daten zwischen dem Speicher des zweiten Mikrorechner COM2 und dem des weiteren Mikrorechner COM5 erfolgen. Während dieser Zeit muß jedoch der Adressenbus ADB1 und der Datenbus DAB1 vom ersten Rechner COM1 freigegeben werden. Natürlich sind auch weitere Bustrennstufen zwischen dem ersten Rechner COM1 und dem DMA-Controller DC1 denkbar, dann wird jedoch eine Steuerlogik, z. B. ein weiterer Mikrorechner zur Steuerung des DMA-Controllers erforderlich. Es ist selbstverständlich auch möglich, die Lese- und Schreibsignale mit zusätzlichen Steuersignalen zu verknüpfen, um die gewünschten Schreib-Lese-Speicher anzusprechen.

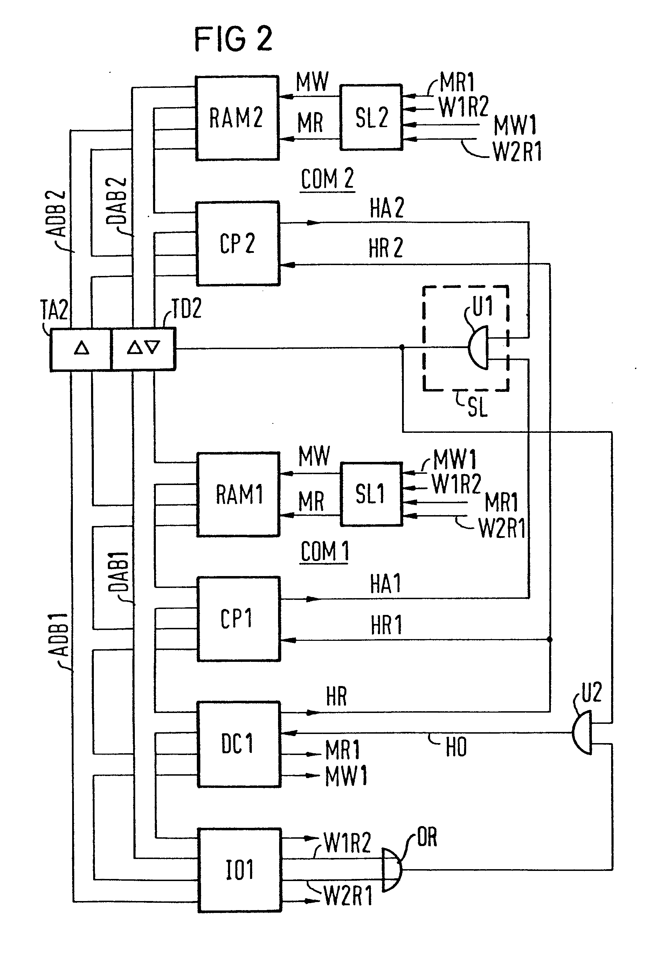

In Fig. 2 ist ein detaillierteres Ausführungsbeispiel für zwei Mikrorechner dargestellt. Der erste Mikrorechner COM1 enthält einen Mikroprozessor CP1 mit dazugehörigem Programmspeicher und einem Schreib-Lese-Speicher RAM1. Diesem ersten Mikrorechner ist ein DMA-Controller DC1 und eine Ausgabeeinheit IO1 zugeordnet. Hierfür kann der Baustein 8255 der Fa. Intel' Corporation, USA verwendet werden. Über einen Adressenbus ADB1 und einen Datenbus DAB1 sind der Schreib-Lese-Speicher RAM1, der Mikroprozessor CP1, der DMA-Controller DC1 und die Ein-Ausgabeeinheit IO1 miteinander verbunden. Aus Gründen der Übersichtlichkeit wurde der Steuerbus und weitere selbstverständliche Steuerleitungen nicht dargestellt.

Der zweite Mikrorechner COM2 besteht aus einem zweiten Mikroprozessor CP2 mit dazugehörigem Programmspeicher und einem zweiten Schreib-Lese-Speicher RAM2. Mikroprozessoren und Schreib-Lese-Speicher sind über einen Adressenbus ADB2 und einen Datenbus DAB2 miteinander verbunden. Der Adressenbus ADB2 ist über eine Adressenbus-Trennstufe TA2 mit dem Adressenbus ADB1 verbunden, der Datenbus DAB2 des zweiten Mikrorechners COM2 ist über eine Datenbus-Trennstufe TD2 mit dem Datenbus DAB1 verbunden. Jedem Schreib-Lese-Speicher RAM1, RAM2 ist eine Schreib-Lese-Logikschaltung vorgeschaltet, dem ersten Schreib-Lese-Speicher RAM1 die Schreib-Lese-Logikschaltung SL1 und dem zweiten Schreib-Lese-Speicher RAM2 die zweite Schreib-Lese-Logikschaltung SL2. Zwei Ausgänge der Schreib-Lese-Logikschaltungen sind jeweils mit zwei Eingängen der Schreib-Lese-Speicher verbunden, über diese werden die Signale « Speicher-Lesen » MR und « Speicher-Schreiben » MW übertragen. Außerdem ist eine Steuerlogik SL vorgesehen, die aus einem UND-Gatter U1 besteht, dessen Eingänge an die HALT-Bestätigungsausgänge (hold acknowledge) HA1 und HA2 des ersten und des zweiten Mikroprozessors CP1 und CP2 angeschaltet sind. Ein Ausgang dieses ersten UND-Gatters ist mit Steuereingängen der Bustrennstufen TA2 und TD2 verbunden. Ein erster Ausgang HR des DMA-Controllers DC1 ist mit den HALT-Anfrage-Eingängen (hold request) HR1 und HR2 des ersten und zweiten Mikroprozessors verbunden. Der Ausgang der Steuerlogik SL ist über ein zweites UND-Gatter U2 mit dem HALT-Bestätigungseingang HO des DMA-Controllers verbunden. Der zweite Eingang des zweiten UND-Gatters U2 ist mit dem Ausgang eines ODER-Gatters OR verbunden, dessen Eingänge mit zwei Ausgängen der Ausgabeeinheit IO1 verbunden sind. An desen Ausgängen werden die Schreibrichtungssignale W1R2, W2R1 abgegeben. Diese beiden Ausgänge der Ausgabeeinheit IO1 sind mit Eingängen der Schreib-Lese-Logikschaltungen SL1 und SL2 verbunden. Weitere Ausgänge der Ausgabeeinheit IO1 sind durch Pfeile angedeutet. Zwei weitere Ausgänge des DMA-Controllers liefern die Signale « Speicher-Lesen » MR1 und « Speicher-Schreiben » MW1. Diese Ausgänge sind ebenfalls mit entsprechenden Eingängen beider Schreib-Lese-Logikschaltungen SL1, SL2 verbunden. Das Schreibrichtungssignal W1R2 gibt die Übertragungsrichtung von RAM2 und RAM1 an. Der Datenaustausch bei dieser Schaltungsanordnung wird vom Mikroprozessor CP1 des ersten Mikrorechners COM1 ausgelöst. Dies kann beispielsweise durch einen Hardware-Interrupt (Unterbrechungssignal) erfolgen, den der Mikroprozessor CP1 erhält. Daraufhin werden dem DMA-Controller CP1 die Adressen der Speicherbereiche für den gewünschten Datenaustausch übermittelt. Anschließend wird der DMA-Controller für den Datenaustausch von Schreib-Lese-Speicher zu Schreib-Lese-Speicher gestartet. Der DMA-Controller gibt ein HALT-Anforderungssignal HR ab. Dieses stellt die Mikroprozessoren in den HALT-Zustand (hold). Die HALT-Bestätigungssignale (hold acknowledge) HA1 und HA2 werden über die Steuerlogik SL zusammengefaßt und über das zweite UND-Gatter U2 dem HALT-Bestätigungseingang HO des DMA-Controllers zugeführt. Dazu ist es notwendig, daß bereits die Schreibrichtung W2R1, W1R2 über Steuerleitungen der Ausgabeeinheit IO1 signalisiert wurde. Über die Befehle « Speicher-Lesen » MR und « Speicher-Schreiben » MW des DMA-Controllers erfolgt nach empfangenem HALT-Bestätigungssignal HO der Datenaustausch zwischen den Schreib-Lese-Speichern RAM1, RAM2 der beiden Mikrorechner COM1, COM2. Die Bustrennstufen TA2 und TD2 sind während des Datenaustausches selbstverständlich durchgeschaltet. Nach beendetem Datenaustausch nimmt der DMA-Controller DC1 das HALT-Anfragesignal HR zurück, die Mikroprozessoren CP1 und CP2 nehmen ihre HALT-Bestätigungssignale zurück, die Bustrennung wird wieder durchgeführt und beide Mikrorechner COM1 und COM2 können unabhängig voneinander arbeiten.

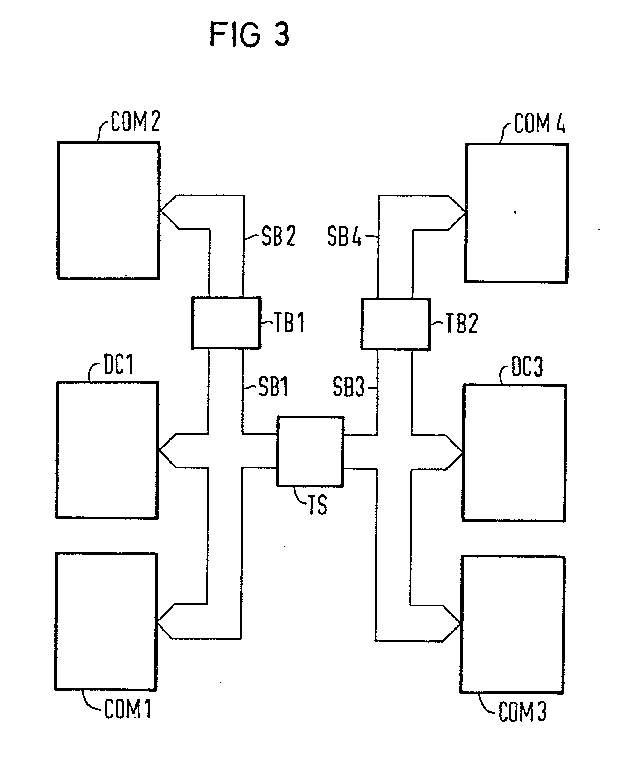

Fig. 3 zeigt eine erfindungsgemäße Anordnung zum Datenaustausch zweier Multi-Mikrorechnersysteme. Ihre Systembusse SB1, SB2 — jeder enthält einen Datenbus, einen Adressbus und einen Steuerbus — sind über eine Systembustrennstufe TS gekoppelt. Das erste Rechnersystem enthält einen ersten Rechner COM1, dem ein erster DMA-Controller DC1 zugeordnet ist. Ein zweiter Rechner COM2 ist über eine Bustrennstufe TB1 an den Systembus des ersten Rechners COM1 und des ersten DMA-Controllers DC1 angeschaltet. Das zweite Multi-Mikrorechnersystem ist identisch aufgebaut. Es enthält einen dritten Rechner COM3 mit einem weiteren zugeordneten DMA-Controller DC3 und einem über eine zweite Bustrennstufe TB2 angekoppelten vierten Rechner COM4. Die Systembusse der angekoppelten Rechner COM2, COM4 sind mit SB2 und SB4 bezeichnet. Die Systembusse SB1 und SB3 der DMA-Controller DC1 und DC3 sind über eine Systembustrennstufe TS miteinander verbunden.

Bei der Anordnung nach Fig. 3 können beide Mikrorechner COM1 und COM2 unabhängig voneinander arbeiten. Dabei kann der Datenaustausch zwischen einzelnen Speicherbereichen des Schreib-Lese-Speichers eines Mikrorechners COM1, COM2 mit Hilfe des jeweiligen DMA-Controllers DC1, DC2 rasch erfolgen. Soll ein Datenaustausch zwischen beiden Mikrorechnern und COM1 und COM2 stattfinden, so werden beide Mikrorechner COM1, COM2 in den HALT-Zustand (hold) geschaltet. Dadurch werden die Anschlüsse für den Daten- und Adressenbus hochohmig und diese Busse daher praktisch vom Rechner abgetrennt. Ein DMA-Controller, beispielsweise der erste DC1, wird aktiviert, während der zweite DMA-Controller DC2 passiv bleibt, d. h. sein Ausgangsport wird ebenfalls in den hochohmigen « Three-State »-Zustand versetzt. Der Datenaustausch zwischen dem Schreib-Lese-Speicher des zweiten Mikrorechners COM2 und dem Schreib-Lese-Speicher des ersten Mikrorechners COM1 wird vom ersten DMA-Controller DC1 gesteuert, wobei Adressen- und Datenbus beider Rechner über die Systembustrennstufe TS verbunden sind. Nach erfolgtem Datenaustausch werden die Systembusse SB1, SB2 beider Systeme wieder getrennt. In gleicher Weise erfolgt der Datenaustausch zwischen zwei Multi-Mikrorechnersystemen nach Fig. 3. Zum Datenaustausch wird hier zusätzlich die Bustrennung der weiteren Rechner COM2 und COM4 aufgehoben. So kann beispielsweise der Speicherinhalt des Schreib-Lese-Speichers des vierten Rechners COM4 in den Schreib-Lese-Speicher des zweiten Rechners COM2 übertragen werden.

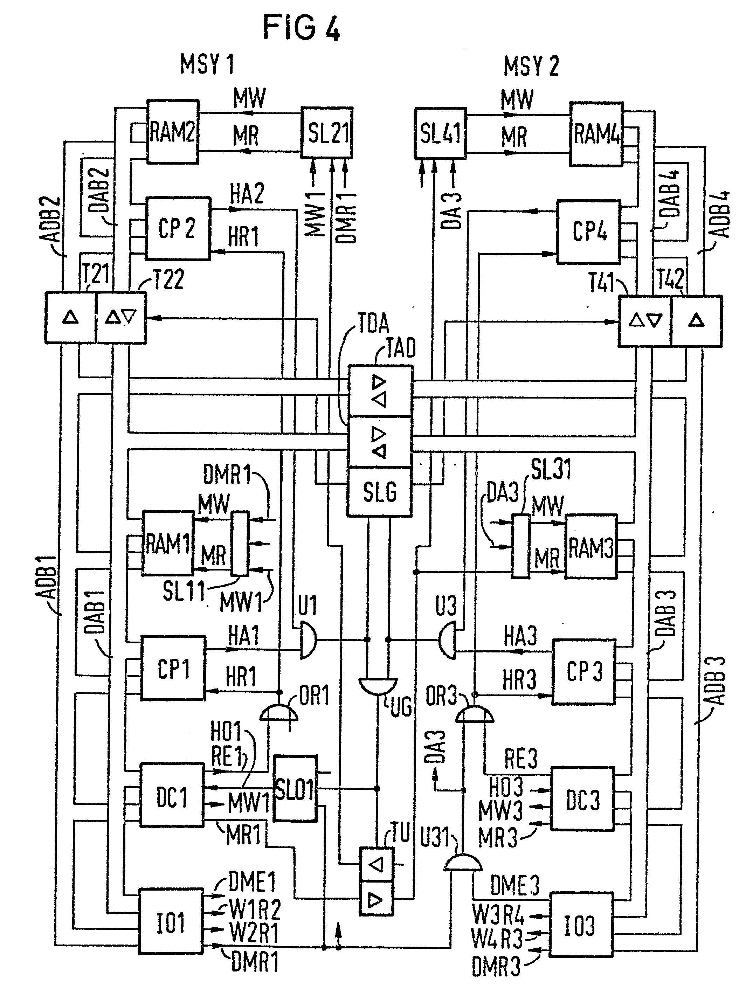

In Fig. 4 ist ein detaillierteres Schaltbild zweier gekoppelter Multi-Mikrorechnersysteme dargestellt. Das erste Multi-Mikrorechnersystem MSY1 besteht aus einem ersten Mikroprozessor CP1 mit dazugehörigem Programmspeicher, das über einen ersten Adressenbus ADB1 und einen ersten Datenbus DAB1 mit dem dazugehörigen Schreib-Lese-Speicher RAM1 verbunden ist. Dem ersten Mikroprozessor CP1 ist ein erster DMA-Controller DC1, zugeordnet. Als DMA-Controller kann beispielsweise der Baustein Am 9517 der Fa. AMD, Sunnyvale, California verwendet werden. Außerdem ist eine erste Ein-Ausgabeeinheit IO1 (z. B. Baustein 8255 der Fa. Intel Corporation, USA) vorgesehen, der ebenfalls an den Adressenbus ADB1 und Datenbus DAB1 angeschlossen ist. Um die Übersichtlichkeit zu wahren, wurden weitere Steuerleitungen nicht dargestellt. Ein zweiter Mikrorechner ist über Bustrennstufen T21 und T22 an den ersten Adressenbus ADB1 und an den ersten Datenbus DAB1 angeschlossen. Er besteht aus einem zweiten Mikroprozessor CP2 mit dazugehörigem Programmspeicher und einem zweiten Schreib-Lese-Speicher RAM2. Zu jedem Schreib-Lese-Speicher gehört eine Schreib-Lese-Logikschaltung, so gehört zu dem ersten Schreib-Lese-Speicher RAM1 die erste Schreib-Lese-Logikschaltung SL11, zu dem zweiten Schreib-Lese-Speicher RAM2 eine zweite Schreib-Lese-Logikschaltung SL21. Jede Schreib-Lese-Logikschaltung hat zwei Ausgänge an denen die Signale « Speicher Lesen » MR und « Speicher Schreiben » MW abgegeben werden. Diese Ausgänge sind mit den entsprechenden Eingängen des dazugehörigen Schreib-Lese-Speichers verbunden. Die Steuerung des Datenaustausches erfolgt über Steuersignale, die vom DMA-Controller DC1 und von der ersten Ein-Ausgabeeinheit IO1 abgegeben werden. Als Ein-Ausgabeeinheit kann beispielsweise der Baustein SAB8255 der Fa. Intel Corporation, USA verwendet werden. Als Bezeichnung für die Aus- oder Eingänge wird ebenfalls der Signalname verwendet. Ein erster Ausgang des ersten DMA-Controllers DC1, an dem das HALT-Anfragesignal RE1 abgegeben wird, ist über ein erstes ODER-Gatter OR1 mit den HALT-Anfrageeingängen HR1, HR2 (hold request) des ersten Mikroprozessors CP1 und des Mikroprozessors CP2 verbunden. Die « HALT-Bestätigungsausgänge » (hold adknowledge- HA1, HA2) der Mikroprozessoren CP1 und CP2 sind auf die Eingänge eines ersten UND-Gatters U1 geführt, das mit einem ersten Eingang einer beiden Mikrorechnersystemen gemeinsamen Steuerlogik SLG und einem ersten Eingang eines beiden Mikrorechnersystemen gemeinsamen UND-Gatters UG verbunden ist. Der Ausgang dieses UND-Gatters ist auf eine erste Steuerlogikschaltung SL01 und auf eine Trennstufe TU geschaltet. Der ersten Steuerlogikschaltung SL01 wird das von einem Ausgang der Ein-Ausgabeeinheit IO1 abgegebene « DMA-Anfragesignal » (DMR1-DMA-Request) zugeführt. Der Ausgang der ersten Steuerlogikschaltung ist mit dem HALT-Eingang (hold acknowledge -HO1) des ersten DMA-Controllers DC1 verbunden. Ein zweiter Ausgang (MW1) des ersten DMA-Controllers DC1 ist mit jeweils einem Eingang der ersten und der zweiten Schreib-Lese-Logikschaltung SL11 und SL21 verbunden. Über diese Steuerleitung wird das Signal MW1 « Speicher schreiben » (Memory write) übertragen. Weitere Eingänge der Schreib-Lese-Logikschaltungen sind mit dem Ausgang der ersten Ein-Ausgabeeinheit IO1 verbunden, die das Signal DMR1 abgibt. Von der Ein-Ausgabeschaltung wird ebenfalls das Signal « Direct-Memory-Access-Enable » DME1 abgegeben, das über ein nicht dargestelltes UND-Gatter mit dem Signal DMR1 zusammengefaßt wird und dann ebenfalls mit jeweils einem weiteren Eingang der Schreib-Lese-Logikschaltungen SL11, SL21 verbunden ist. Außerdem werden von der ersten Ein-Ausgabeeinheit IO1 noch an weiteren Ausgängen die « Schreibrichtung-Signale » W1R2 und W2R1 abgegeben, die ebenfalls mit weiteren Eingängen der Schreib-Lese-Logikschaltungen verbunden sind. Diese Verbindungen wurden jedoch nicht dargestellt.

Ein zweites Multi-Mikrorechnersystem MSY2 ist identisch zu dem bereits beschriebenen System aufgebaut. Es enthält einen dritten Mikroprozessor CP3 mit zugehörigem DMA-Controller DC3, einer Ein-Ausgabeeinheit IO3 und einem über die Bustrennstufen T41 und T42 angeschlossenen vierten Mikrorechner, der den Mikroprozessor CP4 und den Schreib-Lese-Speicher RAM4 enthält. Ebenso sind die entsprechenden Schreib-Lese-Logikschaltungen SL31 und SL41 vorhanden. Der Datenbus des dritten Mikrorechners wurde mit DAB3, der Adressenbus mit ADB3 bezeichnet. Daten- und Adressenbusse des ersten und des dritten Mikrorechners sind über eine Datenbustrennstufe TDA und eine Adressenbustrennstufe TAD miteinander verbunden. Diese Trennstufen und die Bustrennstufen T21, T22, T41 und T42 werden von einer gemeinsamen Steuerlogik SLG durchgeschaltet oder gesperrt. Über eine weitere Trennstufe TU wird ein dritter Ausgang des ersten DMA-Controllers DC1, während des Datenaustauschs auf je einen Eingang der dritten und vierten Schreib-Lese-Logikschaltung SL31 und SL41 des zweiten Multi-Mikrorechnersystems MSY2 geschaltet. Den Eingängen eines zwischengeschalteten UND-Gatters U31 wird das DMR1-Signal der ersten Ein-Ausgabeeinheit IO1 zugeführt. Der zweite Eingang dieses UND-Gatters ist mit einem Ausgang der weiteren Ein-Ausgabeeinheit IO3 verbunden. Der Ausgang dieses zwischengeschalteten UND-Gatters U31 ist mit einem Eingang eines dritten ODER-Gatters OR3 verbunden, das dem ersten ODER-Gatter OR1 entspricht. Außerdem ist der Ausgang des zwischengeschalteten UND-Gatters U31 mit jeweils einem Eingang der dritten und der vierten Schreib-Lese-Logikschaltung SL31 und SL41 verbunden. Es sei an dieser Stelle nochmals darauf hingewiesen, daß beide Multi-Mikrorechnersysteme identisch aufgebaut sind, aus Gründen der Übersicht jedoch nicht jeweils alle Schaltungsdetails in jedem System dargestellt sind. Anschlüsse mit gleichen Bezeichnungen sind miteinander verbunden.

Der beispielsweise angenommene Datenaustausch vom zweiten Multi-Mikrorechnersystem MSY2 in das erste Multi-Mikrorechnersystem MSY1 erfolgt auf folgende Weise.

Über eine nicht dargestellte Prüfeinrichtung oder die Software wird vom Mikroprozessor CP1 des ersten Mikrorechners veranlaßt, den Datenaustausch über den DMA-Controller DC1 einzuleiten. Für den Datenaustausch erforderliche Adressen werden dem ersten DMA-Controller DC1 vom ersten Mikroprozessor CP1 übergeben. Dann gibt der DMA-Controller DC1 an seinem ersten Ausgang ein HALT-Anfragesignal RE1 ab, das den ersten Mikroprozessor CP1 und den zweiten Mikroprozessor CP2 in den Haltzustand schaltet. Über die Ein-Ausgabeeinheit IO1 wird das Signal DMR1 abgegeben, das die beiden Mikroprozessoren CP3 und CP4 des zweiten Multi-Mikroprozessorsystems MSY2 in den Haltzustand schaltet. Sind die Mikroprozessoren in den HALT-Zustand geschaltet, so geben sie die HALT-Bestätigungssignale HA1 bis HA4 ab, die über die UND-Gatter U1, U3 und UG zusammengefaßt werden. Durch die Verknüpfung aller HALT-Bestätigungssignale wird dem ersten DMA-Controller DC1 ein Signal HO1 zugeführt, das ihm mitteilt, daß sich alle Prozessoren im HALT-Zustand befinden und der zweite DMA-Controller DC3 inaktiv ist und der direkte Datenaustausch DMA gestartet werden kann. Über die gemeinsame Steuerlogik SLG sind alle Datenbusse miteinander verbunden. Der DMA-Controller DC3 des zweiten Multi-Mikrorechnersystems MSY2 befindet sich ebenfalls im inaktiven Zustand und hat den Datenbus und den Adressenbus freigegeben. Der erste DMA-Controller DC1 steuert nun den gesamten Adressenbus beider Systeme und die Daten können vom zweiten in das erste System übernommen werden.

Der DMA-Controller DC1 legt hierzu zuerst die Adresse des zu lesenden Bytes an den Adressenbus an und liest mittels des Signales MR1 ein Byte aus dem dritten oder vierten Schreib-Lese-Speicher RAM3 oder RAM4 in einen Zwischenspeicher des DMA-Controllers DC1 ein. Anschließend wird dasselbe Byte mittels des Signales MW1 im allgemeinen unter derselben Adresse in den ersten oder zweiten Schreib-Lese-Speicher RAM1 oder RAM2 eingeschrieben. Der Vorgang wiederholt sich so oft, bis die gewünschten Daten von einem Schreib-Lese-Speicher in den anderen übertragen wurden.

Nach der Übertragung des letzten Bytes wird das Signal RE1 am ersten Ausgang des DMA-Controllers DC1 zurückgenommen, wodurch die Mikroprozessoren CP1 und CP2 des ersten Systems wieder arbeitsfähig werden. Außerdem wird das Signal DMR1 am Ausgang der Ein-Ausgabeeinheit IO1 gelöscht, so daß auch die Mikroprozessoren CP3 und CP4 des zweiten Systems MSY2 arbeitsfähig werden. Die Bustrennung erfolgt über die Adressenbustrennstufe TAD und die Datenbustrennstufe TDA. Beide Systeme sind damit voneinander unabhängig.

Eine Übertragung vom ersten Multi-Mikrorechnersystem MSY1 in das Multi-Mikrorechnersystem MSY2 erfolgt in entsprechender Weise.

Über den ersten Ausgang DME1, DME3 der Ein-Ausgabeeinheiten IO1 und IO3 wird über UND-Gatter U11, U31 verhindert, daß bei einem fehlerhaften Rechnersystem ein Datenaustausch erfolgt.

Der Datenaustausch zwischen zwei verschiedenen Rechnersystemen ist immer dann sinnvoll, wenn temporäre Fehler, z. B. bei der Dateneingabe oder in den Schreib-Lese-Speichern vorliegen.

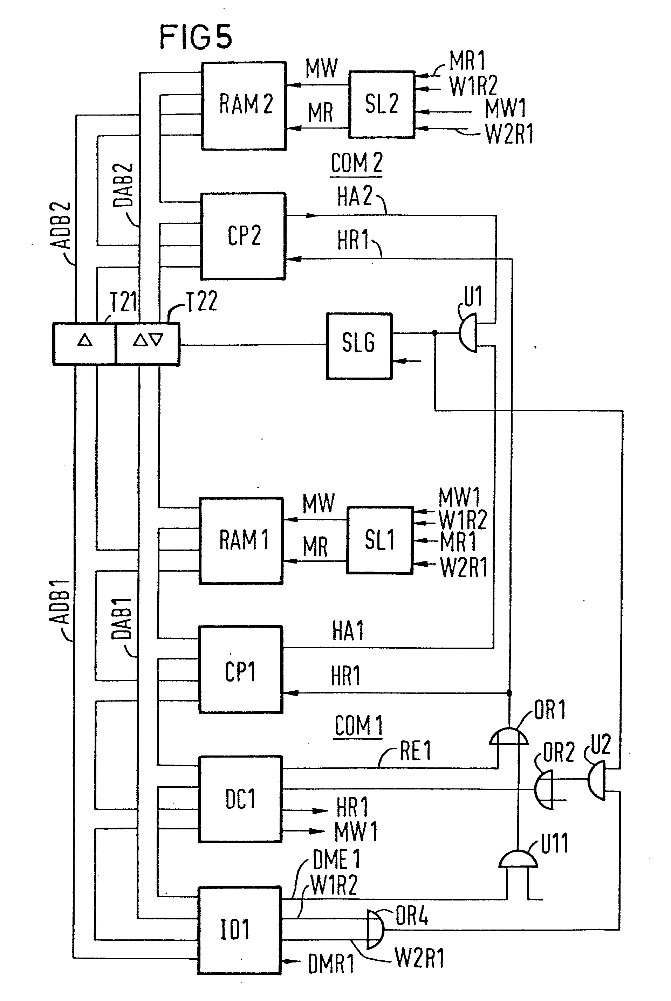

In Fig. 5 wurde nochmals das erste Multi-Mikrorechnersystem MSY1 übersichtlicher dargestellt. Sonst entspricht die Schaltungsanordnung dem Multi-Mikrorechnersystem MSY1 der der Fig. 4 und weiterhin der Figur 2. Von der Ein-Ausgabeeinheit IO1 werden wie in Fig. 2 noch die Schreibrichtungs-Signale W1R2 und W2R1 abgegeben. Die entsprechenden Ausgänge der Ein-Ausgabeeinheit IO1 sind mit den Eingängen eines vierten ODER-Gatters OR4 (OR in Fig. 2) verbunden, dessen Ausgang mit dem ersten Eingang des zweiten UND-Gatters U2 verbunden ist, dessen zweiter Eingang wiederum mit dem Ausgang des ersten UND-Gatters U1 verbunden ist. Über das erste ODER-Gatter OR1 werden die Mikroprozessoren CP1 und CP2 beim Datenaustausch zwischen zwei Mikrorechnern eines Systems in den HALT-Zustand geschaltet. Ist dies erfolgt, so übernimmt der DMA-Controller DC1 — wie bereits beschrieben — den Datenaustausch zwischen den Schreib-Lese-Speichern RAM1 und RAM2 desselben Systems.

Der zweite Eingang des zweiten ODER-Gatters OR2 und der zweite Eingang des UND-Gatters U11 — entspricht dem UND-Gatter 31 — sind unbeschaltet dargestellt, um den Zusammenhang mit der Fig. 4 nicht zu verwischen.

## Ansprüche

1. Anordnung zum Datenaustausch zwischen Mikrorechnern von parallel arbeitenden Multi-Mikrorechnersystemen (MSY1, MSY2), die im wesentlichen aus Mikroprozessoren (CP1, CP2, CP3, CP4) mit zugehörigen Programmspeichern, Schreib-Lese-Speichern (RAM1 bis RAM4) und jeweils einer Ein-Ausgabeeinheit (IO1, IO3) bestehen, dadurch gekennzeichnet, daß jedem ersten Mikrorechner (COM1, COM3) jedes Multi-Mikrorechnersystem ein DMA-Controller (DC1, DC3) über Systembusse (SB1, SB3) zugeordnet ist, daß die Systembusse (SB1, SB3 bzw. DAB1, 3 und ABD1, 3) jedes ersten Mikrorechners (COM1, COM3) über eine Systembustrennstufe (TS) miteinander verbunden sind, daß die Steuerung des Datenaustausches zwischen den Schreib-Lese-Speichern eines Multi-Mikrorechnersystems (MSY1) mit den Schreib-Lese-Speichern (RAM3, RAM4) eines anderen Multi-Mikrorechnersystems (MSY2) von einem der DMA-Controller (DC1) erfolgt, während der andere DMA-Controller (DC3) inaktiv geschaltet ist, daß zum Datenaustausch Steuerleitungen vorgesehen sind, über die durch HALT-Anfragesignale (HR1, HR3) des aktiven DMA-Controllers (DC1) alle Mikroprozessoren (CP1, CP2, CP3, CP4) der Mikrorechner (COM1 bis COM4) in den HALT-Zustand geschaltet werden, daß HALT-Bestätigungssignale (HA1, HA2; HA3, HA4) eines jeden Multi-Mikroprozessorsystems (MSY1, MSY2) jeweils über ein UND-Gatter (U1, U3) zusammengefaßt sind, daß Ausgänge der UND-Gatter (U1, U3) mit den Eingängen einer gemeinsamen Steuerlogik (SLG) verbunden sind, die zum Datenaustausch die Systembustrennstufe (TS; TDA, TAD) und Bustrennstufen (TA2, TD2; TB1, TB2 bzw. T21, T22, T41, T42) zwischen den Daten austauschenden Mikrorechnern (COM1, COM2; COM3, COM4) durchschaltet, daß die Ausgänge der UND-Gatter (U1, U3) außerdem über ein gemeinsames UND-Gatter (UG) auf eine Steuerlogikschaltung (SL01) jedes DMA-Controllers (DC1) geführt ist, die ein HALT-Bestätigungssignal (HO1) an den aktiven DMA-Controller (DC1) abgibt, daß ein Signal Speicher-Lesen (MR1) des aktiven DMA-Controllers (DC1) Schreib-Lese-Logikschaltungen (SL31, SL41) des Daten ausgebenden Multi-Mikrorechnersystems (MSY3) zugeführt ist, daß ein Signal Speicher-Schreiben (MW1) des aktiven DMA-Controllers (DC1) Schreib-Lese-Logikschaltungen (SL11, SL21) des Daten empfangenden Multi-Mikroprozessorsystem (MSY1) zugeführt ist, daß die von einer jeden Multi-Mikroprozessorsystem zugeordneten Ein-Ausgabeeinheit (IO1, IO3) abgegebenen DMA-Anfragesignale (DMR1) den Mikroprozessoren (CP3, CP4) und deren Schreib-Lese-Logikschaltungen (SL31, SL21) zugeführt werden und daß jedoch für den Datenaustausch zwischen den Schreib-Lese-Speichern (RAM1, RAM2) der Mikrorechner eines Multi-Mikrorechnersystems jeweils der diesem System zugeordnete DMA-Controller aktiv geschaltet ist.

2. Anordnung nach Anspruch 1, dadurch gekennzeichnet, daß mehr als zwei Mikrorechnersysteme über weitere Systembustrennstufen (TS) parallelgeschaltet sind.

3. Anordnung nach Anspruch 1 oder 2, dadurch gekennzeichnet, daß die Steuerlogik (SLG) derart ausgelegt ist, daß der Datenaustausch vom DMA-Controller des Daten empfangenden Mikrorechners oder Multi-Mikrorechnersystems gesteuert wird und über ihn erfolgt.

4. Anordnung nach einem der vorhergehenden Ansprüche, dadurch gekennzeichnet, daß Überwachungseinrichtungen vorgesehen sind, die beim Auftreten eines Fehlers einen Datenaustausch vom fehlerfreien System in das fehlerhafte System veranlassen.

5. Anordnung nach Anspruch 4, dadurch gekennzeichnet, daß eine Überwachungseinrichtung vorgesehen ist, die verhindert, daß bei einem irreparablen Multi-Mikrorechnersystem (MSY1, MSY2) ein Datenaustausch zwischen beiden Systemen erfolgt.

6. Anordnung nach einem der vorhergehenden Ansprüche, dadurch gekennzeichnet, daß den Schreib-Lese-Speichern jedes Mikrorechners eines Multi-Mikrorechnersystems ein anderer Adressenbereich zugeordnet ist.

7. Anordnung nach den Ansprüchen 1 oder 3 bis 6, dadurch gekennzeichnet, daß das erste Mikrorechnersystem (MSY1) aus dem ersten Mikroprozessor (CP1) mit zugehörigem Programmspeicher über einen ersten Datenbus (DAB1) und einem ersten Adressenbus (ADB1) mit dem ersten DMA-Controller (DC1) und der ersten Ein-Ausgabeeinheit (IO1) verbunden ist und über Bustrennstufen (T21, T22) mit dem zweiten Mikroprozessor (CP2) und dem zweiten Schreib-Lese-Speicher (RAM2) verbunden ist, daß der erste Datenbus (DAB1) und der erste Adressenbus (ADB1) des ersten Systembusses (SB1) jeweils über eine Datenbustrennstufe (TDA) und eine Adressenbustrennstufe (TAD) mit einem Datenbus (DAB3) bzw. einem Adressenbus (ADB3) des zweiten gleich aufgebauten Multi-Mikrorechnersystems (MSY2) mit dem dritten Mikrorechner (CP3), dem diesen zugeordneten weiteren DMA-Controller (DC3), dem Schreib-Lese-Speicher (RAM3), der weiteren Ein-Ausgabeeinheit (IO3) und dem vierten Mikrorechner (CP4) mit dem dazugehörigem vierten Schreib-Lese-Speicher (RAM4) verbunden ist, daß den Schreib-Lese-Logikschaltungen (SL11, SL21 ; SL31, SL41) der Schreib-Lese-Speicher (RAM1 bis RAM4) vom aktiven DMA-Controller (DC1) Schreibsignale (MW1) und Lesesignale (MR1) zugeführt werden, daß während des Datenaustausches die Daten- und Adressenbusse (DAB1, 2, 3, 4 ; ADB1, 2, 3, 4) zusammengeschaltet werden, daß der aktive erste DMA-Controller (DC1) den Datenaustausch steuert, daß die Schreib-Lese-Speicher (RAM3, RAM4) des Daten ausgebenden zweiten Systems (MSY2) ein Lesesignal (MR) erhalten, daß über die Schreib-Lese-Logikschaltung die Schreib-Lese-Speicher (RAM1, RAM2) des ersten Systems (MSY1) ein Schreibsignal (MR) erhalten und daß der Datenaustausch vom ersten in das zweite Multi-Mikrorechnersystem in entsprechender Weise erfolgt (Fig. 4).

8. Anordnung nach einem der vorhergehenden Ansprüche, dadurch gekennzeichnet, daß jedes Multi-Mikrorechnersystem mehr als zwei Mikrorechner (COM1, COM2) enthält, daß die weiteren Mikrorechner (COM5) über weitere Bustrennstufen (TA5, TD5) an den Adressenbus (ADB1) und den Datenbus (DAB1) des DMA-Controllers (DC1) angeschaltet sind, daß für den Datenaustausch zwischen den Schreib-Lese-Speichern der Mikrorechner (COM1, COM2, COM5) Steuerleitungen (ST1, ST2) des ersten Mikrorechners (COM1) mit zugeordnetem DMA-Controller (DC1) vorgesehen sind, die die erforderlichen Bustrennstufen der Adressen- und Datenbusse (TA2, TA5 ; TD2, TD5) zwischen den Daten austauschenden Mikrorechnern eines Multi-Mikrorechnersystems durchschalten, und daß weitere Steuerleitungen zwischen dem DMA-Controller (DC1) und den Mikrorechnern (COM1, COM2, COM5) vorgesehen sind, die über Speicher-Lesebefehle (MR) und Speicher-Schreibbefehle (MW) zusammen mit der richtigen Durchschaltung des Datenbusses die Richtung des Datenaustausches über den DMA-Controller (DC1) zwischen den Schreib-Lese-Speichern der Mikrorechner (COM1, COM2, COM5) festlegen.

9. Anordnung nach Anspruch 1, dadurch gekennzeichnet, daß bei der jedem Multi-Mikrorechnersystem zugeordneten Ein-Ausgabeeinheit (IO1, IO2) Ausgänge für die Richtungssignale (W1R2, W2R1) vorgesehen sind, die mit Eingängen der Schreib-Lese-Logikschaltungen (SL1, SL2) verbunden sind, daß die Ausgänge des DMA-Controllers (DC1), die ein Schreibsignal (MW) oder ein Lesesignal (MR) abgeben, mit weiteren Eingängen der Schreib-Lese-Logikschaltungen (SL1, SL2) und mit den Richtungssignalen (W1R2 ; W2R1) verknüpft sind, daß ein Ausgang des DMA-Controllers, der ein HALT-Anforderungssignal (HR1) abgibt, mit den HALT-Eingängen der Mikroprozessoren (CP1, CP2) verbunden ist, daß die HALT-Bestätigungsausgänge (HA1, HA2) der Mikroprozessoren (CP1, CP2) mit einer Steuerlogik (SL) verbunden sind, die die HALT-Bestätigungssignale über ein UND-Gatter (U1) zusammenfaßt, dessen Ausgang mit den entsprechenden Bustrennstufen (TA2, TD2) verbunden ist und dem HALT-Bestätigungseingang (HO) des DMA-Controllers zur Auslösung des Datenaustausches zugeführt ist (Fig. 2).

10. Anordnung nach Anspruch 9, dadurch gekennzeichnet, daß zwischen dem Ausgang der Steuerlogik (SL) und dem HALT-Bestätigungseingang (HO) des DMA-Controllers ein zweites UND-Gatter (U2) eingeschaltet ist, dessen zweiter Eingang mit dem Ausgang eines ODER-Gatters (OR) verbunden ist, an dessen Eingängen die Richtungssignale (W1R2, W2R1) anliegen (Fig. 2).

**Claims**

1. An arrangement for exchanging data between microcomputers of parallel operating multi-microcomputer systems (MSY1, MSY2) which basically consist of microprocessors (CP1, CP2, CP3, CP4) with assigned programme stores, write-read stores (RAM1 to RAM4) and in each case one input-output unit (IO1, IO3), characterised in that each first microcomputer (COM1, COM3) of each multi-microcomputer system is assigned a DMA-controller (DC1, DC3) via system buses (SB1, SB3) that the system buses (SB1, SB3 and DAB1, 3 and ADB1, 3) of each first microcomputer (COM1, COM3) are connected to one another via a system bus separator stage (TS), that the data exchange between the write-read stores of a multi-microcomputer system (MSY1) and the write-read stores (RAM3, RAM4) of another multi-microcomputer system (MSY2) is controlled by one of the DMA-controllers (DC1) whilst the other DMA-controller (DC3) is switched inactive, that, for the data exchange, control lines are provided via which, by means of HOLD-request signals (HR1, HR3) of the active DMA-controller (DC1), all the microprocessors (CP1, CP2, CP3, CP4) of the microcomputers (COM1 to COM4) are switched into the HOLD-state, that HOLD-acknowledge signals (HA1, HA2; HA3, HA4) of each multi-microprocessor system (MSY1, MSY2) are in each case combined via an AND-gate (U1, U3) that outputs of the AND-gates (U1, U3) are connected to the inputs of a common control logic (SLG) which, for the data exchange, switches through the system bus separator stage (TF, TDA, TAD) and bus separator stages (TA2, TD2; TB1, TB2 and T21, T22, T41, T42) between the microcomputers (COM1, COM2; COM3, COM4) which are exchanging data, that the outputs of the AND-gates (U1, U3) also lead via a common AND-gate (UG) to a control logic circuit (SL01) of each DMA-controller (DC1), which circuit emits a HOLD-acknowledge signal (HO1) to the active DMA-controller (DC1), that a store-read signal (MR1) of the active DMA-controller (DC1) is fed to write-read logic circuits (SL31, SL41) of the multi-microcomputer system (MSY3) which emits data, that a store-write signal (MW1) of the active DMA-controller (DC1) is fed to write-read logic circuits (SL11, SL21) of the multi-processor system (MSY1) which receives data, that the DMA-request signals (DMR1) which are emitted from an input-output unit (IO1, IO3) assigned to each multi-microprocessor system are fed to the microprocessors (CP3, CP4) and their write-read logic circuits (SL31, SL21), but that for the data exchange between the write-read stores (RAM1, RAM2) of the microcomputers of a multi-microcomputer system the DMA-controller in each case assigned to this system is activated.

2. An arrangement as claimed in claim 1, characterised in that more than two microcomputer systems are connected in parallel via further system bus separator stages (TS).

3. An arrangement as claimed in claim 1 or 2, characterised in that the control logic (SLG) is designed in such manner that the data exchange is controlled by the DMA-controller of the microcomputer or multi-microcomputer system which receives data and takes place via the latter.

4. An arrangement as claimed in one of the preceding claims, characterised in that monitoring devices are provided which, on the occurrence of a fault, instigate a data exchange from the fault-free system into the faulty system.

5. An arrangement as claimed in claim 4, characterised in that a monitoring device is provided which prevents data exchange taking place between the two systems in the event that a multi-microcomputer system (MSY1, MSY2) is irreparable.

6. An arrangement as claimed in one of the preceding claims, characterised in that the write-read stores of each microcomputer of a multi-microcomputer system are assigned a different address zone.

7. An arrangement as claimed in the claims 1 or 3 to 6, characterised in that the first microcomputer system (MSY1), comprising the first microprocessor (CP1) with assigned programme store, is connected via a first data bus (DAB1) and a first address bus (ADB1) to the first DMA-controller (DC1) and a first input-output unit (IO1), and is connected via bus separator stages (T21, T22) to the second microprocessor (CP2) and the second write-read store (RAM2), that the first data bus (DAB1) and the first address bus (ADB1) of the first system bus (SB1) are each connected via a data bus separator stage (TDA) and an address bus separator stage (TAD) to a data bus (DAB3) and an address (ADB3) respectively of the second multi-microcomputer system (MSY2) of identical construction, with the third microcomputer (CP3), the additional DMA-controller (DC3) assigned thereto, the write-read store (RAM3), the additional input-output unit (IO3) and the fourth microcomputer (CP4) with associated fourth write-read store (RAM4), that the write-read logic circuits (SL11, SL21; SL31, SL41) of the write-read stores (RAM1 to RAM4) are supplied with write signals (MW1) and read signals (MR1) by the active DMA-controller (DC1), that during the data exchange the data buses and address buses (DAB1, 2, 3, 4; ADB1, 2, 3, 4) are interconnected, that the active first DMA-controller (DC1) controls the data exchange, that the write-read stores (RAM3, RAM4) of the second system (MSY2) which emit data receive a read signal (MR), that via the write-read logic circuit the write-read stores (RAM1, RAM2) of the first system (MSY1) receive a write signal (MR), and that the data exchange from the first into the second multi-microcomputer system takes place in a corresponding fashion (figure 4).

8. An arrangement as claimed in one of the preceding claims, characterised in that each multi-microcomputer system includes more than two microcomputers (COM1, COM2), that the further microcomputers (COM5) are connected via further bus separator stages (TA5, TD5) to the address bus (ADB1) and the data bus (DAB1) of the DMA-controller (DC1), that for the data exchange between the write-read stores of the microcomputers (COM1, COM2, COM5), control lines (ST1, ST2) of the first microcomputer (COM1) are provided, having an assigned DMA-controller (DC1), which lines switch through the required bus separator stages of the address buses and data buses (TA2, TA5; TD2, TD5) between the microcomputers, which exchange data, of a multi-microcomputer system, and that further control lines are provided between the DMA-controller (DC1) and the microcomputers (COM1, COM2, COM5) which lines, via store-read commands (MR) and store-write commands (MW) together with the correct switch-through of the data bus, determine the direction of the data exchange via the DMA-controller (DC1) between the write-read stores of the microcomputers (COM1, COM2, COM5).

9. An arrangement as claimed in claim 1, characterised in that the input-output unit (IO1, IO2) assigned to each multi-microcomputer system is provided with outputs for the direction signals (W1R2, W2R1), which outputs are connected to inputs of the write-read logic circuits (SL1, SL2), that the outputs of the DMA-controller (DC1) which emit a write signal (MW) or a read signal (MR) are logic-linked to further inputs of the write-read logic circuits (SL1, SL2) and to the direction signals (W1R2, W2R1), that an output of the DMA-controller which emits a HOLD-request signal (HR1) is connected to the HOLD-inputs of the microprocessors (CP1, CP2), that the HOLD-acknowledge outputs (HA1, HA2) of the microprocessors (CP1, CP2) are connected to a control logic (SL) which combines the HOLD-acknowledge signals via an AND-gate (U1) whose output is connected to the corresponding bus separator stages (TA2, TD2) and leads to the HOLD-acknowledge input (HO) of the DMA-controller in order that the data exchange may be triggered (figure 2).

10. An arrangement as claimed in claim 9, characterised in that between the output of the control logic (SL) and the HOLD-acknowledge input (HO) of the DMA-controller there is connected a second AND-gate (U2) whose second input is connected to the output of an OR-gate (OR) at whose inputs the direction signals (W1R2, W2R1) are present (figure 2).

**Revendications**

1. Dispositif pour réaliser l'échange de données entre des microcalculateurs de systèmes de multi-microcalculateurs (MSY1, MSY2), opérant en parallèle et qui sont constitués essentiellement par des microprocesseurs (CP1, CP2, CP3, CP4) comportant des mémoires associées de programmes, des mémoires d'enregistrement et de lecture (RAM1 à RAM4) et des unités respectives d'entrée/sortie (IO1, IO3), caractérisé par le fait qu'à chaque premier microcalculateur (COM1, COM3) de chaque système de multimicrocalculateurs se trouve associé un contrôleur d'accès direct par mémoire (DC1, DC3) par l'intermédiaire de bus système (SB1, SB3), que les bus système (SB1, SB3) ou DAB1, 3 ou ADB1, 3) de chaque premier microcalculateur (COM1, COM3) sont reliés entre eux par l'intermédiaire d'un étage (TS) de séparation des bus système, que la commande de l'échange des données entre les mémoires d'enregistrement et de lecture d'un système de multi-microcalculateurs (MSY1) et les mémoires d'enregistrement et de lecture (RAM3, RAM4) d'un autre système de multimicrocalculateurs (MSY2) est réalisée par l'un des contrôleurs d'accès direct en mémoire (DC1) tandis que l'autre contrôleur d'accès direct en mémoire (DC3) est branché à l'état inactif, que pour l'échange des données il est prévu des lignes de commande par l'intermédiaire desquelles tous les microprocesseurs (CP1, CP2, CP4) des microcalculateurs (COM1 à COM4) sont branchés à l'état de MAINTIEN par des signaux de demande de MAINTIEN (HR1, HR3), que des signaux de confirmation de maintien (HR1, HR2 ; HA3, HA4) de chaque système de multi-processeurs (MSY1, MSY2) sont réunis par l'intermédiaire de circuits ET respectifs (U1, U3), que des sorties des circuits ET (U1, U3) sont reliés aux entrées d'une logique commune de commande (SLG), qui interconnecte directement, pour la transmission de données, l'étage (TS1 ; TDA, TAD) de séparation des bus système et des étages (TA2, TD2, TB1, TB2 ou T21, T22, T41, T42) de séparation des bus entre les microcalculateurs (COM1, COM2 ; COM3, COM4) échangeant des données, que les sorties des circuits ET (U1, U3) raccordées en outre par l'intermédiaire d'un circuit ET commun (UG) à un circuit logique de commande (SL01) de chaque contrôleur d'accès direct en mémoire (DC1), qui délivre un signal (HO1) de confirmation de MAINTIEN au contrôleur actif direct en mémoire (DC1), qu'un signal « lecture de la mémoire » (MR1) du contrôleur actif direct en mémoire (DC1) est envoyé à des circuits logiques d'enregistrement et de lecture (SL31, SL34) du système de multi-microcalculateurs (MSY3) délivrant des données, qu'un signal « enregistrement en mémoire » (MW1) du contrôleur actif d'accès direct en mémoire (DC1) est envoyé à des circuits logiques d'enregistrement et de lecture (SL11, SL21) du système de multimicroprocesseurs (MSY1) recevant des données, que les signaux de demande d'accès direct en mémoire (DMR1), délivrés par une unité d'entrée/sortie (IO1, IO3) associée à chaque système de multi-microprocesseurs, sont envoyés aux microprocesseurs (CP3, CP4) et à leurs circuits logiques d'enregistrement et de lecture (SL31, SL21), mais que pour l'échange de données entre les mémoires d'enregistrement et de lecture (RAM1, RAM2) des microcalculateurs d'un système de multi-microcalculateurs, le contrôleur d'accès direct en mémoire associé à ce système est branché à l'état actif.

2. Dispositif suivant la revendication 1, caractérisé par le fait que plus de deux systèmes de microcalculateurs sont branchés en parallèle par l'intermédiaire d'autres étages (TS) de séparation de bus système.

3. Dispositif suivant la revendication 1 ou 2, caractérisé par le fait que la logique de commande (SLG) est agencée de telle sorte que l'échange des données est commandé par le contrôleur d'accès direct en mémoire du microcalculateur ou du système de multi-microcalculateur en recevant des données et est réalisé par ce contrôleur.

4. Dispositif suivant l'une des revendications précédentes, caractérisé par le fait qu'il est prévu des dispositifs de contrôle qui, lors de l'apparition d'une erreur, déclenchent un échange de données depuis un système exempt de défaut vers le système défectueux.

5. Dispositif selon la revendication 4, caractérisé par le fait qu'il est prévu un dispositif de contrôle qui empêche que, dans un système irréparable de multi-microcalculateurs (MSY1, MSY2), un échange de données se produise entre les deux systèmes.

6. Dispositif suivant l'une des revendications précédentes, caractérisé par le fait qu'une autre zone d'adresses est associée aux mémoires d'enregistrement et de lecture de chaque microcalculateur d'un système de multi-microcalculateurs.

7. Dispositif suivant les revendications 1 ou 3 à 6, caractérisé par le fait que le premier système de microcalculateurs (MSY1) est relié, à partir du premier microprocesseur (CP1) muni de la mémoire de programmes associées par l'intermédiaire d'un premier bus de transmission de données (DAB1) au premier contrôleur d'accès direct en mémoire (DC1) et par l'intermédiaire d'un premier bus de transmission d'adresses (ADB1) à la première unité d'entrée/sortie (IO1), et est relié par l'intermédiaire d'étages (T21, T22) de séparation de bus au second microprocesseur (CP2) et à la seconde mémoire d'enregistrement et de lecture (RAM2), que le premier bus de transmission de données (DAB1) et le premier bus de transmission d'adresses (ADB1) du premier bus système (SB1) sont reliés respectivement, par l'intermédiaire d'un étage (TDA) de séparation du bus de transmission de données et d'un étage (DAD) de séparation du bus de transmission d'adresses, à un bus de transmission de données (DAB3) et à un bus de transmission d'adresses (ADB3) du second système de multi-microcalculateurs (MSY2), de constitution identique, ainsi qu'au troisième micro-calculateur (CP3), à l'autre contrôleur d'accès direct en mémoire (DC3) associé à ce microcalculateur, à la mémoire d'enregistrement et de lecture (RAM3), à l'autre unité d'entrée/sortie (IO3) et au quatrième micro-calculateur (CP4) ainsi qu'à la quatrième mémoire d'enregistrement et de lecture (RAM4) associée à ce microcalculateur, que des signaux d'enregistrement (MW1) et des signaux de lecture (MR1) sont envoyés aux circuits logiques d'enregistrement et de lecture (SL11, LS21 ; SL31, SL41) des mémoires d'enregistrement et de lecture (RAM1 à RAM4) par le contrôleur actif de l'accès direct en mémoire (DC1), que pendant l'échange des données, des bus de transmission de données et des bus de transmission d'adresses (DAB1, 2, 3, 4 ; ADBA1, 2, 3, 4) sont interconnectés entre eux, que le premier contrôleur actif d'accès direct en mémoire (DC1) commande l'échange des données, que les mémoires d'enregistrement et de lecture (RAM3, RAM4) du second système (MSY2) délivrant des données reçoivent un signal de lecture (MR), que les mémoires d'enregistrement et de lecture (RAM1, RAM2) du premier système (MSY1) reçoivent un signal d'enregistrement (MR) par l'intermédiaire du circuit logique d'enregistrement et de lecture et que l'échange des données s'effectue de façon correspondante depuis le premier au second système à multi-microcalculateurs (figure 4).

8. Dispositif suivant l'une des revendications précédentes, caractérisé par le fait que chaque système de multi-microcalculateurs contient plus de deux microcalculateurs (COM1, COM2), que les autres microcalculateurs (COM5) sont raccordés par l'intermédiaire d'autres bus (TAD5, TD5) de séparation de bus au bus de transmission d'adresses (ADB1) et au bus de transmission de données (DAB1) du contrôleur d'accès direct en mémoire (DC1), que pour l'échange des données entre les mémoires d'enregistrement et de lecture des microcalculateurs (COM1, COM2, COM5), il est prévu des lignes de commande (ST1, ST2) du premier microcalculateur (COM1) auquel est associé le contrôleur d'accès direct en mémoire (DC1), lesdites lignes de commande interconnectant les étages nécessaires de séparation des bus de transmission d'adresses et de transmission de données (TA2, TA5 ; TD2, TD5) entre les microcalculateurs, échangeant des données, d'un système de multi-microcalculateurs et qu'il est prévu entre le contrôleur d'accès direct en mémoire (DC1) et les microcalculateurs (COM1, COM2, COM5), des lignes de commande supplémentaires qui, par l'intermédiaire d'instructions (MR) de lecture de mémoire et d'instructions (MW) d'enregistrement en mémoire et en association avec l'interconnexion directe des bus de transmission de données, fixent la direction de l'échange des données par l'intermédiaire du contrôleur d'accès direct en mémoire (DC1) entre les mémoires d'enregistrement et de lecture du microcalculateur (COM1, COM2, COM5).

9. Dispositif suivant la revendication 1, caractérisé par le fait que dans le cas de chaque unité d'entrée/sortie (IO1, IO3) associée à chaque système de multi-microcalculateurs, il est prévu, pour les signaux de direction (W1R2, W2R1), des sorties qui sont reliées à des entrées des circuits logiques d'enregistrement et de lecture (SL1, SL2), que les sorties du contrôleur d'accès direct en mémoire (DC1), qui délivrent un signal d'enregistrement (MW) ou un signal de lecture (MR), sont combinées à d'autres entrées du circuit logique d'enregistrement et de lecture (SL1, SL2) et aux signaux de direction (W1R2, W2R1), qu'une sortie du contrôleur d'accès direct en mémoire, qui délivre un signal (HR1) de demande de MAINTIEN est reliée aux entrées de MAINTIEN des microprocesseurs (CP1, CP2), que les sorties (HA1, HA2) de confirmation de MAINTIEN des microprocesseurs (CP1, CP2) sont reliées à une logique de commande (SL), qui réunit les signaux de confirmation de MAINTIEN par l'intermédiaire d'un circuit ET et dont la sortie est reliée aux étages (TA2, TD2) correspondant de séparation de bus et est raccordée à l'entrée (HO) de confirmation de MAINTIEN du contrôleur d'accès direct en mémoire pour le déclenchement de l'échange de données.

10. Dispositif suivant la revendication 9, caractérisé par le fait qu'entre la sortie de la logique de commande (SL) et l'entrée (HO) de confirmation de MAINTIEN du contrôleur d'accès direct en mémoire se trouve branché un second circuit ET (U2), dont la seconde entrée est reliée à la sortie d'un circuit OU (OR), aux entrées duquel sont appliqués les signaux de direction (W1R2, W2R1) (figure 2).

FIG 1
COM 5
ADB 5
DAB 5
TA5
TD5
COM 1
DAB 1
ADB 1
ST1
DC 1
ST2
MR
MW
TA2
TD 2
ADB 2
DAB 2
COM 2

FIG 2
RAM2
MW
MR
SL2
MR1
W1R2
MW1
W2R1
COM 2
CP 2
HA 2
HR 2
ADB 2
DAB 2
TA2
TD2
U1
SL
RAM1
MW
MR
SL1
MW1
W1R2
MR1
W2R1
COM 1
CP1
HA1
HR1
DAB1
ADB1
DC1
HR
HO
MR1
MW1
U2
IO1
W1R2
W2R1
OR

FIG 3
COM2
COM4
SB2
SB4
TB1
TB2
DC1
DC3
SB1
SB3
TS
COM1
COM3

FIG 4
MSY 1
MSY 2
RAM2
MW
MR
SL21
SL41
RAM4
CP 2
HA2
HR1
MW1
DMR1
DA3
CP4
ADB2
DAB2
DAB4
ADB4
T21
T22
T41
T42
TDA
TAD
SLG
DMR1
MW
RAM1
MR
SL11
MW1
SL31
DA3
MW
MR
RAM3
ADB1
DAB1
U1
U3
DAB3
CP1
HA1
HR1
OR1
UG
HA3
CP3
HR3
OR3
ADB3
HO1
RE1
SLO1
DC1
MW1
MR1
DA3
RE3
HO3
MW3
MR3
DC3
TU
U31
DME1
W1R2
W2R1
DMR1
IO1
DME3
W3R4
W4R3
DMR3
IO3

FIG 5
RAM 2
MW
MR
SL 2
MR1
W1R2
MW1
W2R1
COM 2
HA2
HR1
CP2
DAB2
ADB2
T21
T22
SLG
U1
RAM 1
MW
MR
SL1
MW1
W1R2
MR1
W2R1
HA1
CP1
HR1
DAB1
ADB1
OR1
COM 1
RE1
OR2
U2
DC1
HR1
MW1
U11
DME 1
W1R2
IO1
OR4
W2R1
DMR1